(19)

Europäisches
Patentamt

European
Patent Office

Office européen
des brevets

(11) **EP 3 505 901 A1**

(12) # EUROPEAN PATENT APPLICATION
published in accordance with Art. 153(4) EPC

(43) Date of publication:
**03.07.2019 Bulletin 2019/27**

(21) Application number: **17846959.9**

(22) Date of filing: **29.08.2017**

(51) Int Cl.:
***G01M 13/04*** *(2019.01)*

(86) International application number:
**PCT/KR2017/009420**

(87) International publication number:
**WO 2018/044034 (08.03.2018 Gazette 2018/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **29.08.2016 KR 20160110314**

(71) Applicant: **Korea Hydro & Nuclear Power Co., Ltd
Gyeongju-si, Gyeongsangbuk-do 38120 (KR)**

(72) Inventors:
• **KIM, Yang Seok
Daejeon 34053 (KR)**
• **KIM, Dae Woong
Sejong 30130 (KR)**
• **KIM, Bum Nyun
Gyeongju-si
Gyeongsangbuk-do 38097 (KR)**
• **PARK, Young Sheop
Sejong 30064 (KR)**
• **PARK, Chi Yong
Daejeon 35217 (KR)**

• **KIM, Jong Seog
Daejeon 34023 (KR)**
• **KIM, Hyoung Kyun
Daejeon 34101 (KR)**
• **LEE, Byoung Oh
Daejeon 34075 (KR)**
• **KIM, Ji In
Seoul 05069 (KR)**
• **CHOI, Nam Woo
Seongnam-si
Gyeonggi-do 13612 (KR)**
• **RYU, Ji Soo
Gyeongju-si
Gyeongsangbuk-do 38130 (KR)**
• **CHANG, Hee Seung
Daejeon 34087 (KR)**
• **SHIN, You Soo
Gyeongju-si
Gyeongsangbuk-do 38081 (KR)**

(74) Representative: **Habermann, Hruschka &
Schnabel
Patentanwälte
Montgelasstraße 2
81679 München (DE)**

(54) **METHOD FOR DIAGNOSING ROTATION DEVICE BY MEANS OF
ROTOR-BEARING-FOUNDATION MODEL**

(57)    The present invention provides a method for diagnosing a rotation device by means of a rotor-bearing-foundation model, the method characterized by utilizing the characteristics of a simulation rotor system. To this end, the present invention comprises the steps of: simulating a rotation device as a rotor system; forming a mathematical model for the rotor system; estimating the state of the rotation device by means of the mathematical model and a vibration measurement value of the rotation device; and diagnosing for abnormalities in the rotation device from the changes in an estimated value. Therefore, since a rotation device is diagnosed for abnormalities by means of forming a mathematical model for a rotor system, the present invention enables more accurate diagnosis of the rotation device.

EP 3 505 901 A1

# FIG. 1

```
┌─────────────────────────────────────┐
│   Simulate rotation device rotor system │
└─────────────────────────────────────┘
                    │
                    ▼
┌─────────────────────────────────────┐
│       Form mathematical model        │
└─────────────────────────────────────┘
                    │
                    ▼
┌─────────────────────────────────────┐
│      Estimate rotation device state  │
└─────────────────────────────────────┘
                    │
                    ▼
┌─────────────────────────────────────┐
│       Compare initial state value    │
│          and estimation value        │
└─────────────────────────────────────┘
                    │
                    ▼
┌─────────────────────────────────────┐
│       Diagnose abnormalities         │
│          of rotation device          │
└─────────────────────────────────────┘
```

## Description

[Technical Field]

The present invention relates to a method for diagnosing a rotation device by means of a rotor-bearing-foundation model and, more particularly, to a method for diagnosing a rotation device by means of a rotor-bearing-foundation model for diagnosing a rotation device provided in a power plant.

[Background Art]

Generally, a rotation device such as a turbine, a water supply pump, and the like is provided. In the rotation device, a monitoring system for safe operation of a power plant may be provided. The monitoring system monitors various types of variables including an axial vibration of a rotation device in real time, and generates a warning or stops generation when an abnormal situation occurs.

However, since a plant shutdown is critical in a power plant operation, a detailed diagnosis is performed with a diagnosing system provided with a diagnosing function. However, in the diagnosing function included in the conventional diagnosing system, a vibration measurement value is mainly used, and there is a problem that a physical property of a rotation device is not considered.

[Disclosure]

[Technical Problem]

An object of the present invention is to provide method for diagnosing a rotation device by means of a rotor-bearing-foundation model, the method characterized by utilizing the characteristics of a simulation rotor system.

[Technical Solution]

A method for diagnosing a rotation device by means of a rotor-bearing-foundation model according to the present invention comprises simulating a rotation device as a rotor system, forming a mathematical model for the rotor system, estimating a state of the rotation device by means of the mathematical model and a vibration measurement value of the rotation device, and diagnosing for abnormalities in the rotation device from the changes in an estimated value.

The rotor system may be simulated as a foundation comprising a rotor, a journal bearing and a bearing housing.

The step of forming the mathematical model may comprise calculating a parameter of the rotor by using finite element method and calculating a parameter of the journal bearing based on Reynolds Equation.

The step of forming the mathematical model may use finite difference method as a method for obtaining an approximation solution of the journal bearing model.

A parameter of the rotor system may comprise at least one of mass, stiffness and damping coefficient.

The step of forming the mathematical model may further comprise calculating a parameter of the rotation device foundation by using increasing speed data of the rotation device.

The step of estimating a state of the rotation device may estimate at least one of an external force exerted on the journal bearing and a bearing dynamic coefficient based on a rotation axis vibration displacement of the rotor system and a vibration acceleration measurement value of the bearing housing.

[Advantageous Effects]

According to a method for diagnosing a rotation device by means of a rotor-bearing-foundation model according to the present invention, an abnormal state of a rotation device is diagnosed by constructing a mathematical model for a rotor system, and there is an effect that more accurate diagnosis of a rotation device is available.

The technical effects in the present invention are not limited to the above-described technical effects and other technical effects which are not described herein will become apparent to those skilled in the art from the following description.

[Description of Drawings]

FIG. 1 is a flowchart illustrating a method for diagnosing a rotation device by means of a rotor-bearing-foundation model according to an embodiment;

FIG. 2 is a conceptual diagram illustrating journal bearing dynamic coefficients according to an embodiment;

FIG. 3 is a flowchart for calculating journal bearing dynamic coefficients using finite difference method according to an embodiment; and

FIG. 4 is a conceptual diagram illustrating a rotor-bearing-foundation system according to an embodiment.

[Mode for Invention]

Hereinafter, embodiments of the present invention are described in detail with reference to accompanying drawings. However, the embodiments are not limited to the embodiment described below, but may be implemented in various forms, and the embodiments are provided to inform the scope of the invention perfectly to those ordinary skilled in the art by perfecting the description of the present invention. Some parts of a shape or the like of an element in the drawing may be exaggerated for clear description, and an element denoted by the same reference numeral means the same element.

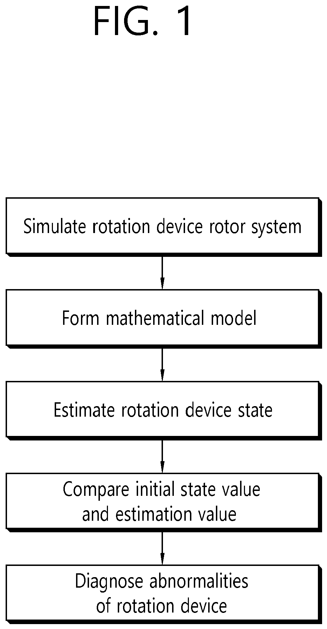

FIG. 1 is a flowchart illustrating a method for diagnosing a rotation device by means of a rotor-bearing-foundation model according to an embodiment.

As shown in FIG. 1, in the method for diagnosing a rotation device according to the embodiment, a rotation device may be simulated as a rotor system.

In the rotor system, various types of forces are exerted during an operation. These forces may be distinguished as a lateral direction, an axial direction and a rotational direction according to an exerted direction. And, the forces may be distinguished as a static force which is uniform for a time and a dynamic force of which magnitude and direction are changed.

At this time, the dynamic force causes a lateral and axial directional vibration of an axis, a torsional vibration, and the like. Here, the rotor system has a property like a black box that output a vibration when the dynamic force is exerted. When such a property like a black box is closely understood, a device state may be understood on which force causes a vibration in the rotor system.

The vibration of a rotation axis in the rotor system means a proportion of an external force for Dynamic Stiffness. This means that two causes are existed in increasing a magnitude of the vibration. One of the two causes is that a magnitude of the external force is increased, and another of the two causes is that a performance of the rotor system is degraded and dynamic stiffness becomes weak. Accordingly, for diagnosis, it is importance to detect a change of the external force exerted on a system and an internal parameter, for example, the dynamic stiffness.

Such a block box property may be estimated by developing a mathematical model for the rotor system. Here, a proper mathematical model enables to predict an influence on a vibration caused by a change of force. Such a property is very importance factor even in the case of diagnosing a device.

Accordingly, in the rotor system, a rotation device may be briefly simulated as a foundation including a rotor, a journal bearing and a bearing housing. In addition, a mathematical model for the rotor system may be constructed.

A rotor-journal bearing-foundation model, which is a mathematical model, is described as below. Since a diameter is smaller than a length in most of rotors, first, the rotor system is modeled to be a rotating beam to which one or more disks are attached. And, the entire model is constructed in a method of combining a journal bearing model with a foundation model. Here, parameters of a rotor, a journal bearing and a foundation, which are included in the rotor system, may include at least one of mass, stiffness and damping coefficient.

Here, the parameters (mass, stiffness and damping coefficient) of the rotor included in the rotor system model is calculated by using finite element method. And, in order to consider an influence of hydrodynamic lubrication influenced on a rotor behavior, the parameters (stiffness and damping coefficient) of the journal bearing is obtained by using the journal bearing model based on Reynolds Equation. Here, finite difference method may be used for a method of obtaining an approximate solution of the journal bearing model.

In addition, the foundation parameters (mass, stiffness and damping coefficient) included in the rotor-journal bearing-foundation model are obtained by using increasing speed(speed up) data of the rotation device. And, at this time, an initial external force, for example, a miss alignment or an unbalance value is simultaneously estimated, and used as a diagnostic reference value.

As such, when the rotor, the rotor-journal bearing and the foundation parameters are determined, the parameters are not changed so long as there is no abnormality in the rotation device itself, and the change of external force may be estimated by using the rotor-journal bearing-foundation model and a vibration acceleration measurement value of the bearing housing. And, an abnormality state of the rotation device may be diagnosed by comparing the estimated value with the external force estimated value.

In addition, by using the initial external force and the vibration displacement estimation value of the rotation axis, a parameter of the journal bearing may be obtained, and the abnormality state of the rotation device may be diagnosed by comparing it with the initial external force.

Here, in describing the journal bearing model according to the present invention, the property of the journal bearing is classified into a property of static stable state and a property of dynamic state, generally.

At this time, the static property may include Sommerfeld Number, an orientation angle, a frictional loss, and the like. And, the representative dynamic property is known by 8 dynamic coefficients (stiffness and damping coefficient), and such properties may be calculated by using a geometrical shape of the bearing. Particularly, the dynamic coefficients related to oil film is the main property of the journal bearing, and these coefficients influence on a dynamic behavior of the rotor-bearing system significantly. In addition, the bearing force, which means a binding force exerted on the journal bearing by the bearing oil film, is a function of a position of the journal and a velocity, and may be represented by using 8 dynamic coefficients and a displacement (x, y).

[Equation 1]

$$F_x = k_{xx}x + k_{xy}y + c_{xx}\dot{x} + c_{xy}\dot{y}$$

[Equation 2]

$$F_y = k_{yx}x + k_{yy}y + c_{yx}\dot{x} + c_{yy}\dot{y}$$

Herein, $F_x$ and $F_y$ are bearing forces in x and y directions, respectively, and the definition of 8 dynamic coefficients is as below.

[Equation 3]

$$k_{xx} = \frac{\partial F_x}{\partial x}, \quad k_{xy} = \frac{\partial F_x}{\partial y}, \quad k_{yx} = \frac{\partial F_y}{\partial x}, \quad k_{yy} = \frac{\partial F_y}{\partial y}$$

[Equation 4]

$$c_{xx} = \frac{\partial F_x}{\partial \dot{x}}, \quad c_{xy} = \frac{\partial F_x}{\partial \dot{y}}, \quad c_{yx} = \frac{\partial F_y}{\partial \dot{x}}, \quad c_{yy} = \frac{\partial F_y}{\partial \dot{y}}$$

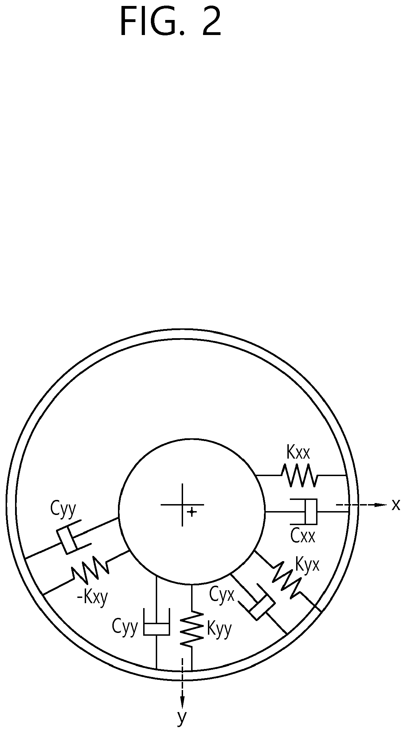

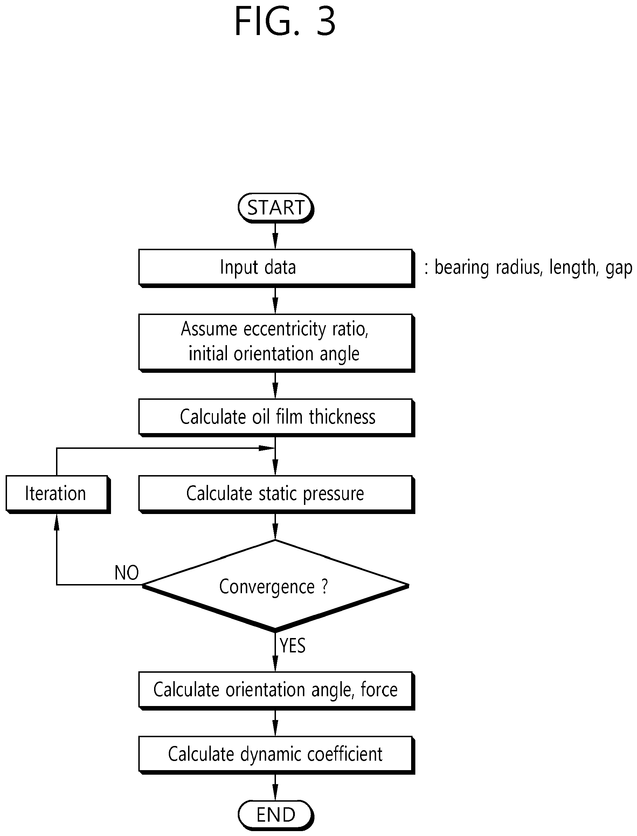

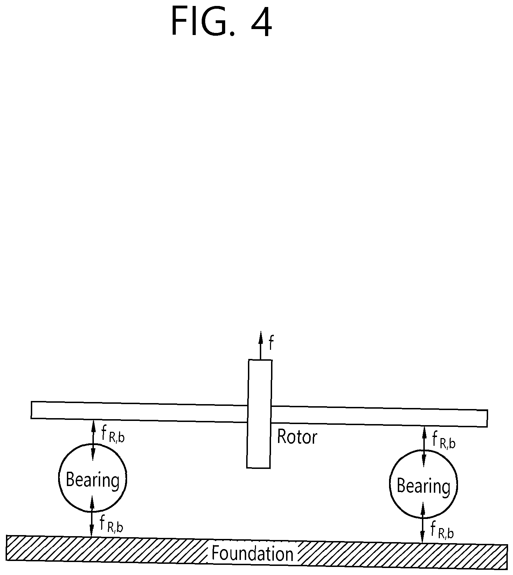

Meanwhile, FIG. 2 is a conceptual diagram illustrating journal bearing dynamic coefficients according to an embodiment, and FIG. 3 is a flowchart for calculating journal bearing dynamic coefficients using finite difference method according to an embodiment. And, FIG. 4 is a conceptual diagram illustrating a rotor-bearing-foundation system according to an embodiment.

As shown in FIG. 2 and FIG. 3, the dynamic coefficients of journal bearing are dominant in the dynamic performance of a rotor bearing system, and very importance in kinetic analysis. Since a programming and an understanding the finite difference method are not so difficult, the finite difference method is used for solving Reynolds Equation, generally. FIG. 3 is a flowchart for calculating the journal bearing dynamic coefficients from Reynolds Equation and the journal bearing model constructed by Equations 1 to 4 using finite difference method.

Here, the rotor-journal bearing-foundation model is described in detail. FIG. 4 depicts the concept of the rotor-journal bearing-foundation system schematically, and the equation of motion of the rotor-journal bearing-foundation system is as represented in Equation 5 below.

[Equation 5]

$$\begin{bmatrix} Z_{R,ii} & Z_{R,ib} & 0 & 0 \\ Z_{R,bi} & Z_{r,bb}+Z_B & -Z_B & 0 \\ 0 & -Z_B & Z_B+Z_{F,bb} & Z_{F,bi} \\ 0 & 0 & Z_{F,ib} & Z_{F,ii} \end{bmatrix} \begin{Bmatrix} r_{R,i} \\ r_{R,b} \\ r_{F,b} \\ r_{F,i} \end{Bmatrix} = \begin{Bmatrix} f \\ 0 \\ 0 \\ 0 \end{Bmatrix}$$

Here, $Z$ of Equation 5 is a Dynamic stiffness matrix constructed by mass, damping and stiffness value. And, subscripts $b$ and $i$ represent degree of freedoms of a bearing and an internal connection point, respectively. $F$, $R$ and $B$ mean a foundation, a rotor and a bearing. $r$ is a response and $f$ is a combination of a force exerted owing to unbalance and a force owing to miss alignment.

Here, in the case that a measurement is performed only on a position of the bearing, the term $r_{F,i}$ may be removed, and the foundation parameter may be simplified as $\overline{Z_F}=Z_{F,bb}-Z_{F,bi}Z_{F,ii}^{-1}Z_{F,ib}$.

Accordingly, since this corresponds to $r_{R,i}=Z_{R,ii}^{-1}\{f-Z_{R,ib}r_{R,b}\}$ from the first column of Equation 5, Equation 5 may be simply represented as Equation 6 below.

[Equation 6]

$$\begin{bmatrix} P & -Z_B \\ -Z_B & Z_B+\overline{Z_F} \end{bmatrix} \begin{Bmatrix} r_{R,b} \\ r_{F,b} \end{Bmatrix} = \begin{Bmatrix} -Z_{R,bi}Z_{R,ii}^{-1}f \\ 0 \end{Bmatrix}$$

Herein, $P=Z_{R,bb}+Z_B-Z_{R,bi}Z_{R,ii}^{-1}Z_{R,ib}$. If there is $r_{F,b}$ which is a value measured in a bearing support structure, $r_{R,b}$ may be represented by using $r_{F,b}$ in Equation 6, and Equation 6 may be represented as Equation 7 below.

[Equation 7]

$$\overline{Z_F}r_{F,b}+Z_BP^{-1}Z_{R,bi}Z_{R,ii}^{-1}f=Z_B[P^{-1}Z_B-I]r_{F,b}$$

Accordingly, the foundation model, that is, the unknown quantities in Equation 7 are $\overline{Z_F}$ and force $f$ and the other values may be obtained by using the rotor-bearing model and the vibration acceleration measurement value in the bearing housing.

In Equation 5 to Equation 7, the force vector $f$ defined by a combination of the force exerted owing to unbalance and the force owing to miss alignment may be represented as Equation 8 below.

[Equation 8]

$$f = f_{un} + f_m$$

Herein, $f_{un}$ is an unbalance vector, and $f_m$ is a vector of coupling force and moment, and may be denoted by Equations 9 and 10 below.

[Equation 9]

$$f_{un} = \omega^2 T e$$

[Equation 10]

$$f_m = T_m e_m$$

Herein, $T$ is a matrix for selecting a surface on which unbalance is existed, $e$ is a parameter vector related to unbalance of the rotor. $T_m$ is a matrix indicating a coupling position, and $e_m$ is a vector constructed by force and moment of vertical and horizontal directions in a coupling joint $m$. Accordingly, when Equations 8 to 10 are substituted to Equation 7, this is represented as Equation 11 below.

[Equation 11]

$$\overline{Z}_F r_{F,b} + Z_B P^{-1} Z_{R,bi} Z_{R,ii}^{-1} [\omega^2 T T_m] \left\{ \begin{array}{c} e \\ e_m \end{array} \right\} = Z_B [P^{-1} Z_B - I] r_{F,b}$$

Herein, when a vector including all of mass, stiffness and damping coefficient of foundation parameter $\overline{Z}_F$ which is unknown is denoted as $v$, and a response vector constructed by responses measured in each frequency is denoted as $W$, $\overline{Z}_F r_{F,b} = W_v$. Equation 11 is rewritten for angular velocity $\omega$ as Equation 12 below.

[Equation 12]

$$[W(\omega) R(\omega) R_m(\omega)] \left\{ \begin{array}{c} v \\ e \\ e_m \end{array} \right\} = Q(\omega)$$

Herein, $W, R, R_m$ and $Q$ simplifies the terms in the Equation, and Equation 12 is a function of each frequency component. By using Equation 12 and the vibration data measured in increasing speed duration, $v, e, e_m$ may be obtained. In addition, from these values, the foundation parameter and the initial external force may be estimated. In the case that the foundation parameter and the initial external force are determined, subsequently, the change of the external force such as unbalance, miss alignment, and the like may be estimated in real time by using the vibration data measured when the rotation device is driving. Furthermore, in the case that there is no change in the external force, the force exerted on the bearing and the change of the bearing dynamic coefficient may be estimated in real time, and accordingly, a performance change of the bearing may be diagnosed.

Therefore, according to a method for diagnosing a rotation device by means of a rotor-bearing-foundation model according to the present invention, an abnormal state of a rotation device is diagnosed by constructing a mathematical model for a rotor system, and there is an effect that more accurate diagnosis of a rotation device is available.

An embodiment of the present invention described above and depicted in the drawing should not be interpreted to limit the technical concept of the present invention. The scope of the present invention is limited only by the features defined in the claims, and those skilled in the art may improve or modify the technical concept of the present invention in various forms. Accordingly, the improvement and modification belongs to the scope of the present invention so long as the improvement and modification are obvious to those skilled in the art.

## Claims

1.   A method for diagnosing a rotation device by means of a rotor-bearing-foundation model, the method comprising:

   simulating a rotation device as a rotor system;
   forming a mathematical model for the rotor system;
   estimating a state of the rotation device by means of the mathematical model and a vibration measurement value of the rotation device; and
   diagnosing for abnormalities in the rotation device from the changes in an estimated value.

2.   The method for diagnosing a rotation device by means of a rotor-bearing-foundation model of claim 1, wherein the rotor system is simulated as a foundation including a rotor, a journal bearing and a bearing housing.

3.   The method for diagnosing a rotation device by means of a rotor-bearing-foundation model of claim 2, wherein the step of forming the mathematical model comprises:

   calculating a parameter of the rotor by using finite element method; and
   calculating a parameter of the journal bearing based on Reynolds Equation.

4.   The method for diagnosing a rotation device by means of a rotor-bearing-foundation model of claim 3, wherein the step of forming the mathematical model uses finite difference method as a method for obtaining an approximation solution of the journal bearing model.

5.   The method for diagnosing a rotation device by means of a rotor-bearing-foundation model of claim 3, wherein a parameter of the rotor system comprises at least one of mass, stiffness and damping coefficient.

6.   The method for diagnosing a rotation device by means of a rotor-bearing-foundation model of claim 3, wherein the step of forming the mathematical model further comprises:
   calculating a parameter of the rotation device foundation by using increasing speed data of the rotation device.

7.   The method for diagnosing a rotation device by means of a rotor-bearing-foundation model of claim 1 or 3, wherein the step of estimating a state of the rotation device estimates at least one of an external force exerted on the journal bearing and a bearing dynamic coefficient based on a rotation axis vibration displacement of the rotor system and a vibration acceleration measurement value of the bearing housing.

# FIG. 1

```
┌─────────────────────────────────────┐
│   Simulate rotation device rotor system │
└─────────────────────────────────────┘
                    │
                    ▼
┌─────────────────────────────────────┐
│        Form mathematical model        │
└─────────────────────────────────────┘
                    │
                    ▼
┌─────────────────────────────────────┐
│      Estimate rotation device state   │
└─────────────────────────────────────┘
                    │
                    ▼
┌─────────────────────────────────────┐
│       Compare initial state value     │
│         and estimation value          │
└─────────────────────────────────────┘
                    │
                    ▼
┌─────────────────────────────────────┐
│        Diagnose abnormalities         │
│          of rotation device           │
└─────────────────────────────────────┘
```

# FIG. 2

# FIG. 3

```
                    ( START )
                        │
                        ▼
        ┌───────────────────────────────┐
        │          Input data           │    : bearing radius, length, gap
        └───────────────────────────────┘
                        │
                        ▼
        ┌───────────────────────────────┐
        │    Assume eccentricity ratio, │
        │     initial orientation angle │
        └───────────────────────────────┘
                        │
                        ▼
        ┌───────────────────────────────┐
        │   Calculate oil film thickness│
        └───────────────────────────────┘
                        │
   ┌────────────────┐   ▼
   │   Iteration    │ ┌───────────────────────────────┐
   └────────────────┘ │    Calculate static pressure  │
                      └───────────────────────────────┘
                        │
              NO        ▼
        ◄───────────< Convergence ? >
                        │ YES
                        ▼
        ┌───────────────────────────────┐
        │ Calculate orientation angle, force │
        └───────────────────────────────┘
                        │
                        ▼
        ┌───────────────────────────────┐
        │  Calculate dynamic coefficient│
        └───────────────────────────────┘
                        │
                        ▼
                    ( END )
```

# FIG. 4

## INTERNATIONAL SEARCH REPORT

| International application No. |
| --- |
| **PCT/KR2017/009420** |

| A. CLASSIFICATION OF SUBJECT MATTER |
| --- |
| *G01M 13/04(2006.01)i* |
| According to International Patent Classification (IPC) or to both national classification and IPC |

| B. FIELDS SEARCHED |
| --- |
| Minimum documentation searched (classification system followed by classification symbols) <br> G01M 13/04; G06F 17/00; G05B 19/18; G05B 23/02 |
| Documentation searched other than minimum documentation to the extent that such documents are included in the fields searched <br> Korean Utility models and applications for Utility models: IPC as above <br> Japanese Utility models and applications for Utility models: IPC as above |
| Electronic data base consulted during the international search (name of data base and, where practicable, search terms used) <br> eKOMPASS (KIPO internal) & Keywords: rotation equipment, rotor system, mathematical model, vibration measurement value, rotor-bearing-foundation model |

| C. DOCUMENTS CONSIDERED TO BE RELEVANT |
| --- |

| Category* | Citation of document, with indication, where appropriate, of the relevant passages | Relevant to claim No. |
| --- | --- | --- |
| Y | KR 10-2011-0005893 A (ROMAX TECHNOLOGY LIMITED) 19 January 2011 <br> See paragraph [0145]; claim 1; and figures 1-3. | 1-7 |
| Y | MA, Hui et al., "Analysis of Dynamic Charateristics for a Rotor System with Pedestal Looseness", School of Mechanical Engineering and Automation, Northeastern University, 09 February 2010, pages 13-27. <br> See pages 15-17 and figures 1-2. | 1-7 |
| Y | KR 10-1994-0702296 A (IDE, Russell D. et al.) 28 July 1994 <br> See claim 1; and figures 1a-1c. | 3-6 |
| A | KIM, Jong Do et al., "Lubrication Effect of Journal Bearing according to Its Eccentricity and Attitude Angle", Journal of the Korean Society of Manufacturing Process Engineers, October 2015, vol. 14, no. 5, pages 88-95, ISSN 1598-6721. <br> See pages 88-95. | 1-7 |
| A | HONG, Jie et al., "Theoretical Modeling for a Rotor-bearing-foundation System and Its Dynamic Characteristic Analysis", School of Energy and Power Engineering, Beihang University, 2011, pages 1-12. <br> See pages 1-12. | 1-7 |

| ☐ Further documents are listed in the continuation of Box C. | ☒ See patent family annex. |
| --- | --- |

| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |
| --- | --- |
| Date of the actual completion of the international search <br><br> 28 NOVEMBER 2017 (28.11.2017) | Date of mailing of the international search report <br><br> **29 NOVEMBER 2017 (29.11.2017)** |
| Name and mailing address of the ISA/KR <br> Korean Intellectual Property Office <br> Government Complex-Daejeon, 189 Seonsa-ro, Daejeon 302-701, Republic of Korea <br> Facsimile No. +82-42-481-8578 | Authorized officer <br><br><br> Telephone No. |

Form PCT/ISA/210 (second sheet) (January 2015)

**INTERNATIONAL SEARCH REPORT**
Information on patent family members

International application No.

**PCT/KR2017/009420**

| Patent document cited in search report | Publication date | Patent family member | Publication date |
|---|---|---|---|
| KR 10-2011-0005893 A | 19/01/2011 | CN 102016736 A | 13/04/2011 |
| | | CN 102016736 B | 16/09/2015 |
| | | CN 103398844 A | 20/11/2013 |
| | | EP 2300887 A2 | 30/03/2011 |
| | | US 2011-0106510 A1 | 05/05/2011 |
| | | WO 2009-133161 A2 | 05/11/2009 |
| | | WO 2009-133161 A3 | 25/02/2010 |
| KR 10-1994-0702296 A | 28/07/1994 | CA 2116027 A1 | 06/01/1994 |
| | | CA 2169085 A1 | 23/02/1995 |
| | | CN 1038145 A | 20/12/1989 |
| | | CN 1038145 C | 30/04/1993 |
| | | CN 1058080 A | 22/01/1992 |
| | | CN 1058080 C | 02/10/1994 |
| | | CN 1058457 A | 05/02/1992 |
| | | CN 1058457 C | 14/09/1994 |
| | | CN 1062406 A | 01/07/1992 |
| | | CN 1062781 A | 15/07/1992 |
| | | CN 1062781 C | 14/09/1994 |
| | | CN 1063747 A | 19/08/1992 |
| | | CN 1063747 C | 01/10/1995 |
| | | CN 1065913 A | 04/11/1992 |
| | | CN 1085295 A | 13/04/1994 |
| | | CN 1099105 A | 22/02/1995 |
| | | CN 1111327 A | 08/11/1995 |
| | | EP 0317621 A1 | 31/05/1989 |
| | | EP 0317621 B1 | 22/07/1998 |
| | | EP 0343620 A2 | 29/11/1989 |
| | | EP 0343620 A3 | 16/01/1991 |
| | | EP 0343620 B1 | 28/06/1995 |
| | | EP 0495074 A1 | 22/07/1992 |
| | | EP 0495074 B1 | 05/06/1996 |
| | | EP 0497957 A1 | 05/02/1997 |
| | | EP 0527837 A1 | 24/02/1993 |
| | | EP 0527872 A1 | 02/04/1997 |
| | | EP 0531422 A1 | 07/05/1997 |
| | | EP 0533911 A1 | 31/03/1993 |
| | | EP 0533911 A4 | 19/01/1994 |
| | | EP 0533911 B1 | 26/06/1996 |
| | | EP 0539927 A1 | 05/05/1993 |
| | | EP 0558850 A2 | 08/09/1993 |
| | | EP 0608398 A1 | 19/08/1998 |
| | | EP 0617763 A1 | 01/10/1997 |
| | | EP 0637361 A1 | 08/02/1995 |
| | | EP 0637361 B1 | 26/11/1997 |
| | | EP 0639245 A1 | 09/06/1999 |
| | | EP 0646746 A2 | 05/04/1995 |
| | | EP 0693164 A1 | 22/09/1999 |
| | | EP 0707689 A1 | 06/10/1999 |

Form PCT/ISA/210 (patent family annex) (January 2015)

**INTERNATIONAL SEARCH REPORT**
Information on patent family members

| International application No. |
| --- |
| **PCT/KR2017/009420** |

| Patent document<br>cited in search report | Publication<br>date | Patent family<br>member | Publication<br>date |
| --- | --- | --- | --- |
| | | EP 0707690 A1 | 06/10/1999 |
| | | EP 0714483 A1 | 09/06/1999 |
| | | JP 01-503556 A | 30/11/1989 |
| | | JP 02-076924 A | 16/03/1990 |
| | | JP 05-203062 A | 10/08/1993 |
| | | JP 06-002711 A | 11/01/1994 |
| | | JP 08-500415 A | 16/01/1996 |
| | | JP 08-502115 A | 05/03/1996 |
| | | JP 08-502116 A | 05/03/1996 |
| | | JP 08-507136 A | 30/07/1996 |
| | | JP 09-501758 A | 18/02/1997 |
| | | JP 2745067 B2 | 28/04/1998 |
| | | JP 7099171 B2 | 25/10/1995 |
| | | KR 10-1989-0701912 A | 22/12/1989 |
| | | KR 10-1990-0006700 A | 08/05/1990 |
| | | KR 10-1992-0702475 A | 04/09/1992 |
| | | KR 10-1992-0702477 A | 04/09/1992 |
| | | KR 10-1993-0011369 B1 | 04/12/1993 |
| | | KR 10-1994-0002801 B1 | 02/04/1994 |
| | | KR 10-1994-0703499 A | 26/10/1994 |
| | | KR 10-1995-0701416 A | 23/03/1995 |
| | | KR 10-1995-0701417 A | 23/03/1995 |
| | | KR 10-1995-0703704 A | 20/09/1995 |
| | | KR 10-1995-0703705 A | 20/09/1995 |
| | | US 5054938 A | 08/10/1991 |
| | | US 5066144 A | 19/11/1991 |
| | | US 5102236 A | 07/04/1992 |
| | | US 5102237 A | 07/04/1992 |
| | | US 5112143 A | 12/05/1992 |
| | | US 5125754 A | 30/06/1992 |
| | | US 5137373 A | 11/08/1992 |
| | | US 5222815 A | 29/06/1993 |
| | | US 5246295 A | 21/09/1993 |
| | | US 5255984 A | 26/10/1993 |
| | | US 5284392 A | 08/02/1994 |
| | | US 5304006 A | 19/04/1994 |
| | | US 5372431 A | 13/12/1994 |
| | | US 5382097 A | 17/01/1995 |
| | | US 5385409 A | 31/01/1995 |
| | | US 5393145 A | 28/02/1995 |
| | | US 5403154 A | 04/04/1995 |
| | | US 5421655 A | 06/06/1995 |
| | | US 5425584 A | 20/06/1995 |
| | | US 5441347 A | 15/08/1995 |
| | | US 5455778 A | 03/10/1995 |
| | | US 5459674 A | 17/10/1995 |
| | | US 5489155 A | 06/02/1996 |
| | | US 5503479 A | 02/04/1996 |
| | | US 5513917 A | 07/05/1996 |
| | | US 5515458 A | 07/05/1996 |

Form PCT/ISA/210 (patent family annex) (January 2015)

**INTERNATIONAL SEARCH REPORT**
Information on patent family members

International application No.

**PCT/KR2017/009420**

| Patent document cited in search report | Publication date | Patent family member | Publication date |
|---|---|---|---|
| | | US 5531522 A | 02/07/1996 |
| | | US 5556208 A | 17/09/1996 |
| | | US 5558444 A | 24/09/1996 |
| | | US 5564836 A | 15/10/1996 |
| | | US 5603574 A | 18/02/1997 |
| | | US 5620260 A | 15/04/1997 |
| | | US 5660481 A | 26/08/1997 |
| | | US 5743654 A | 28/04/1998 |
| | | WO 88-09443 A1 | 01/12/1988 |
| | | WO 91-17366 A1 | 14/11/1991 |
| | | WO 91-17367 A1 | 14/11/1991 |
| | | WO 91-19112 A1 | 12/12/1991 |
| | | WO 92-02736 A1 | 20/02/1992 |
| | | WO 92-03667 A1 | 05/03/1992 |
| | | WO 92-18783 A1 | 29/10/1992 |
| | | WO 93-22573 A1 | 11/11/1993 |
| | | WO 93-22575 A1 | 11/11/1993 |
| | | WO 94-00819 A1 | 06/01/1994 |
| | | WO 94-07043 A1 | 31/03/1994 |
| | | WO 94-08149 A1 | 14/04/1994 |
| | | WO 94-08150 A1 | 14/04/1994 |
| | | WO 95-05547 A1 | 23/02/1995 |
| | | WO 95-16863 A1 | 22/06/1995 |
| | | WO 95-28574 A1 | 26/10/1995 |

Form PCT/ISA/210 (patent family annex) (January 2015)